# EUROPEAN PATENT SPECIFICATION

(11) **EP 2 380 761 B1**
(45) Date of publication and mention of the grant of the patent: **24.07.2013**
(21) Application number: 11003361.0
(22) Date of filing: 20.04.2011
(51) Int. Cl.: B60G 7/02, B60G 13/00, B62D 21/20, B62D 21/00

(54) **Fastening assembly for connecting a wheel suspension to a vehicle frame**
Befestigungsanordnung für die Verbindung einer Radaufhängung mit einem Fahrzeugrahmen
Dispositif de fixation pour monter une suspension de roue sur un châssis de véhicule

(30) Priority: 21.04.2010 IT VI20100109
(43) Date of publication of application: 26.10.2011
(73) Proprietor: V.E.T.E.G. S.R.L., 24059 Urgnano (BG) (IT)
(72) Inventor: Gioffi, Igor, 28865 Crevoladossola (Verbania) (IT)
(74) Representative: Maroscia, Antonio

(56) References cited:
- EP-A1- 1 241 077
- EP-A1- 1 911 661
- WO-A1-02/26548
- DE-C1- 10 158 107
- JP-A- 2000 108 624
- US-A- 5 538 274
- US-A- 5 820 150

## Description

### Technical field

The present invention has application in the technical field of vehicles, and particularly has as object a fastening assembly for anchoring a suspension to a frame of a vehicle, in particular a light multifunctional vehicle, preferably but not exclusively with electric drive.

### Background Art

It is known that the frame for vehicles of the above-mentioned type generally comprises a pair of longitudinal members joined by crossbars and possibly provided with mounting racks at the front and rear wheels, to which suspensions are fixed for the respective wheels of the vehicle.

In the case in question, the front and rear mounting rack have respective support frames for the wheel axles, and each suspension comprises at least one shock absorbing member and at least one wishbone with inner end hinged to the frame and outer end integral with a wheel pin.

Both the longitudinal members and the mounting racks are generally made by means of metal sections having cross sections with various shapes, of circular or polygonal type, and size suitable for opposing the stresses transmitted by the wheels.

The suspensions are generally fixed to the frame by means of fastening means constituted by U-shaped brackets and supports, which are directly welded to the sections.

Documents US 5 820 150, JP 2000 108 624 and JP 11 034 912 disclose vehicle frames with relevant suspension fastening means.

One problem of such known fastening means is constituted by the fact that they are strongly stressed (torque and shear stress) at narrow zones, so as to considerably increase the localized tension.

As a consequence thereof, it is necessary to make the sections of the frame with large size, considerably increasing their weight and thus the weight of the vehicle in its entirety.

Alternatively, by reducing the weight of the fastening means, the risk of causing breakage at the most mechanically stressed zones considerably increases, e.g. causing the breakage of the supports of the shock absorbers or the perforation of the frame sections.

Therefore, there is the need to optimally distribute the tension acting on the structure of the frame, by improving the configuration of the fastening means.

### Disclosure of the invention

The object of the present invention is to overcome or at least partially remedy the above-mentioned drawbacks, by providing a fastening assembly for anchoring a suspension to a frame of a vehicle with high reliability and lightness characteristics.

In the scope of the general object, a particular object of the present invention is to obtain a fastening assembly of the type mentioned above that allows indicating tension peaks at narrow zones of the vehicle frame.

Another object of the invention is to obtain a fastening assembly of the type mentioned above that allows considerably reducing the weight of the various parts in a manner so as to significantly contribute to the reduction of the weight of the vehicle in its entirety.

These objects, as well as others which will be clearer below, are achieved by a fastening assembly for anchoring a suspension to a frame of a vehicle in accordance with the attached claim 1.

In particular, the assembly is characterized in that each of said brackets has a connecting portion to the frame folded twice to at least partially enclose a respective longitudinal member and a respective supporting frame, in such a manner to distribute the forces acting on the wishbone and on the shock absorbing member over a relatively wide contact surface and avoid localized stress concentrations.

Due to this arrangement, it is possible to distribute the forces acting on the wishbone and on the shock absorbing member over a relatively wide contact surface and avoid localized stress concentrations, as well as considerably reduce the weight of the assembly.

### Brief description of the drawings

Further characteristics and advantages of the invention will be clearer in light of the detailed description of a preferred but not exclusive embodiment of a fastening assembly of a suspension to a vehicle frame according to the invention, illustrated as a non-limiting example with the aid of the drawing table set, in which:

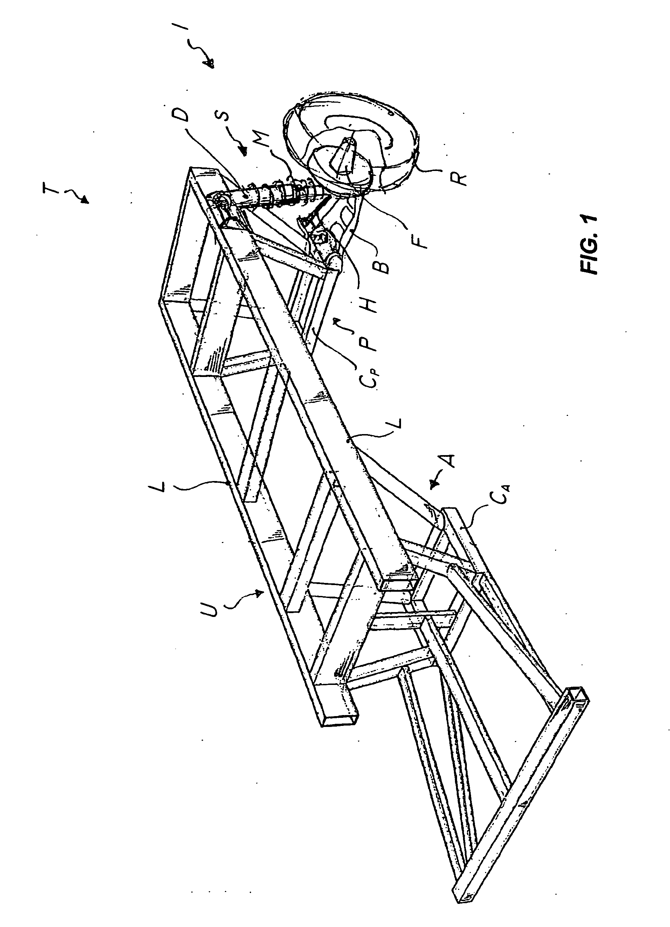

FIG. 1 illustrates a perspective general view of a vehicle frame on which a fastening assembly of the suspension according to the invention is mounted, only at the left rear wheel;

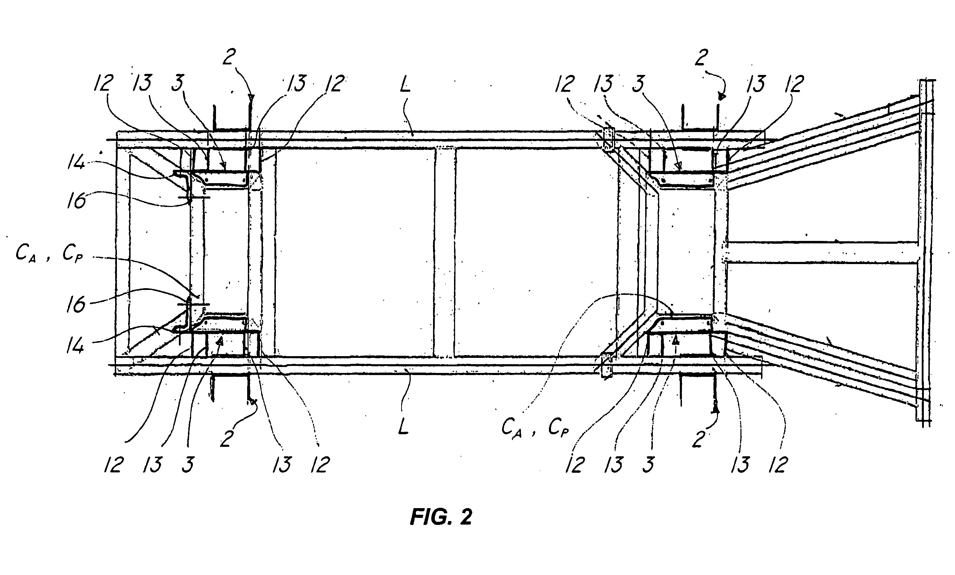

FIG. 2 illustrates a plan view of the frame of FIG. 1;

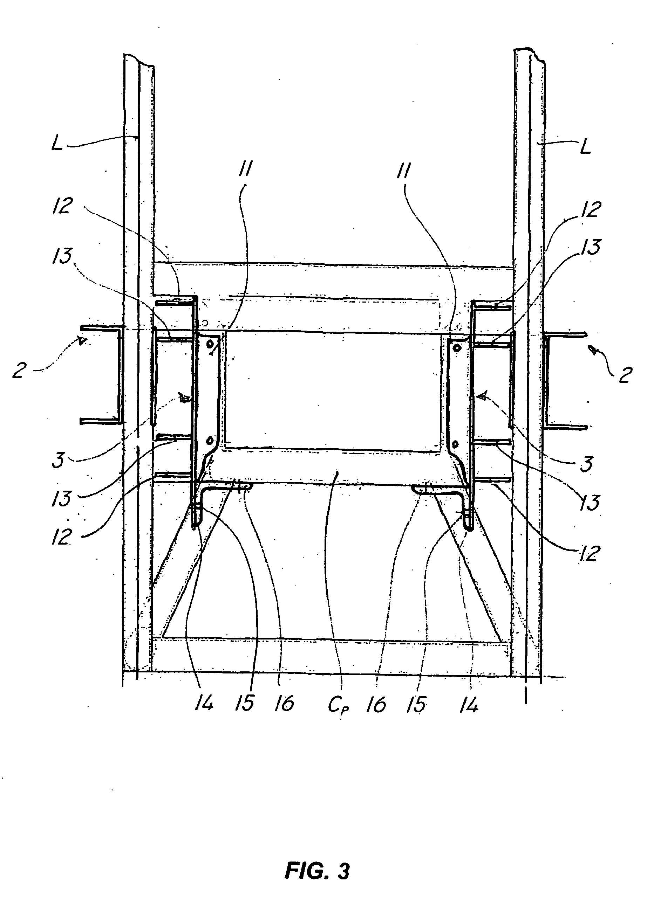

FIG. 3 illustrates a detail of the view of FIG. 2;

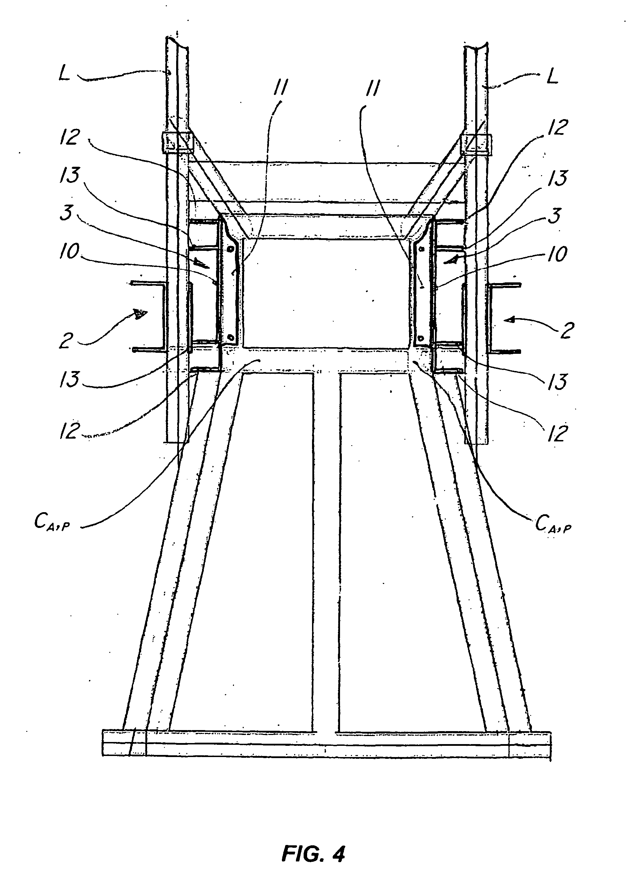

FIG. 4 illustrates another detail of the view of FIG. 2;

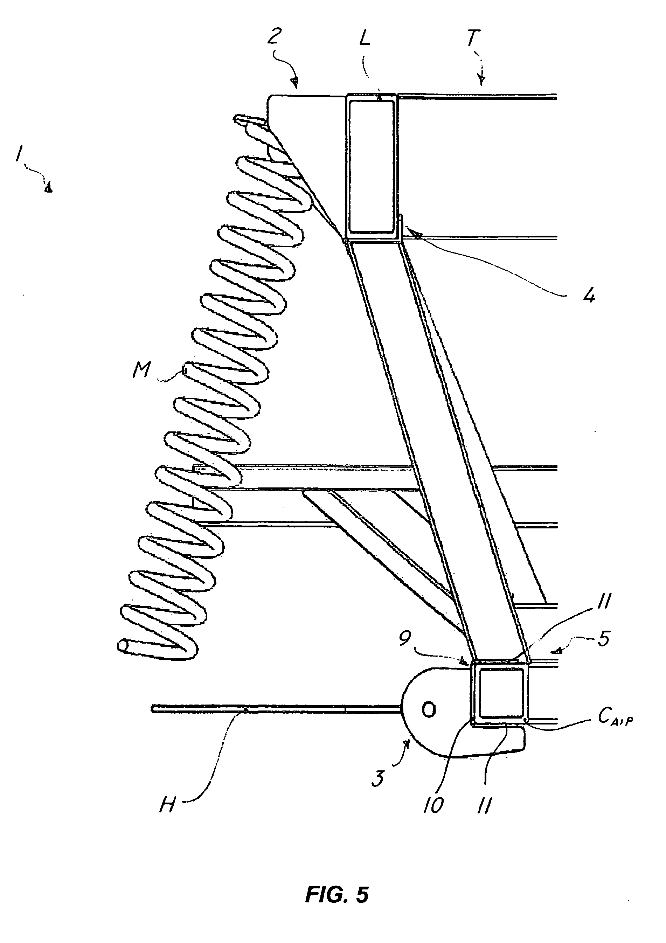

FIG. 5 illustrates a front view of a detail of the assembly according to the invention;

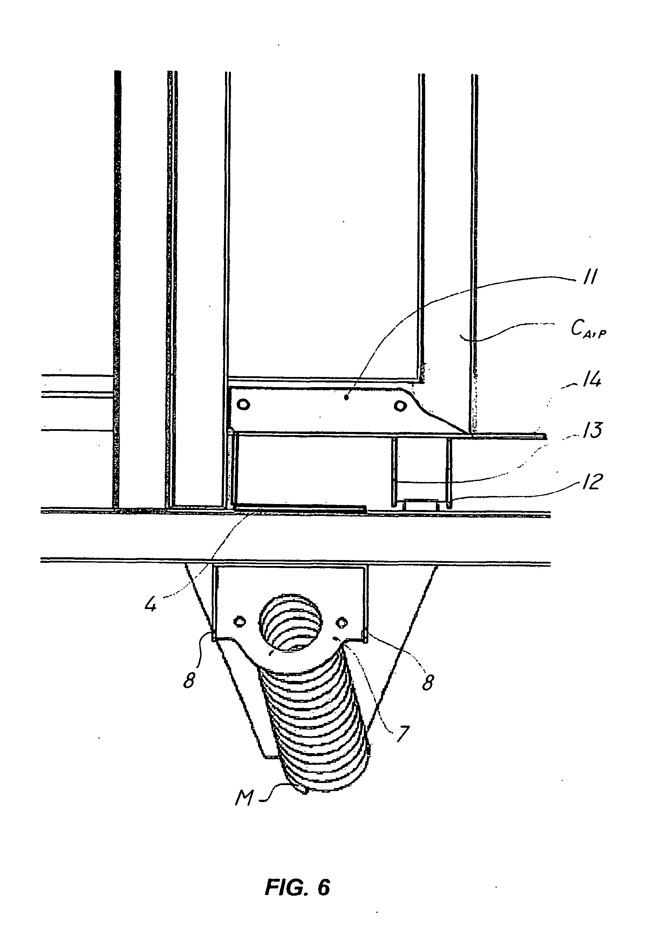

FIG. 6 illustrates a top view of the detail of FIG. 5;

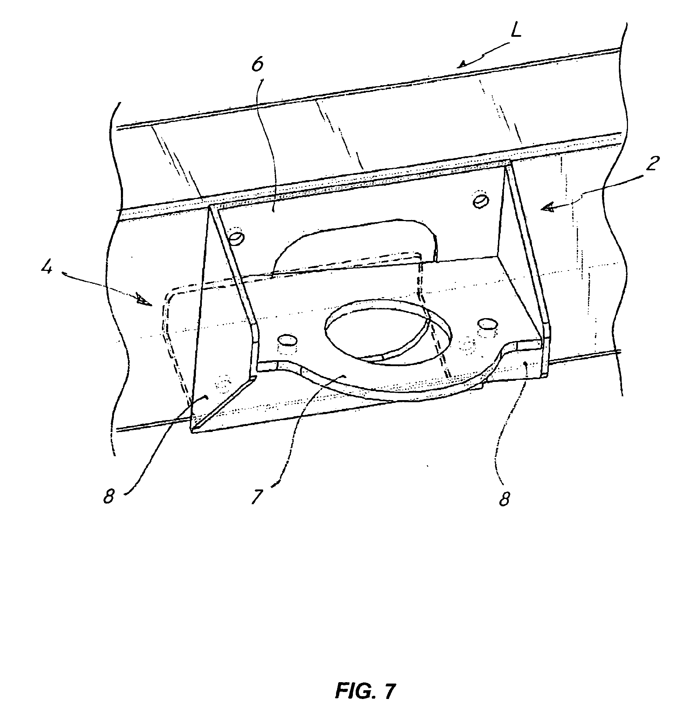

FIG. 7 illustrates a perspective view of a detail of the assembly according to the invention;

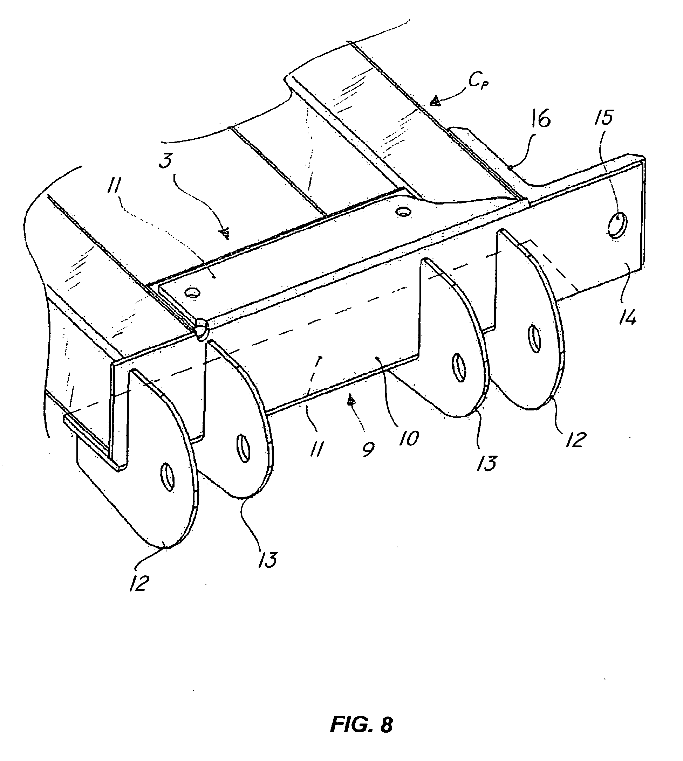

FIG. 8 illustrates a perspective view of another detail of the assembly according to the invention.

### Detailed description of one preferred embodiment

With reference to the mentioned figures, a fastening assembly is illustrated, indicated with the reference number 1 in its entirety, for anchoring a suspension S to a frame T of a vehicle.

Preferably, the vehicle is of light type, with maximum loadless weight of about 550 Kg and maximum full load weight of about 1500 Kg.

The frame T is composed of a preferably U-shaped upper portion with at least one pair of longitudinal members L and a lower portion with at least one front mounting rack A and one rear mounting rack P with respective supporting frames Ca, Cp for wheel axles.

Each suspension S comprises at least one shock absorbing member D and at least one wishbone B with inner end hinged to the frame T and outer end fixed to a pin F of the wheel R.

According to a particular characteristic of the invention, the assembly 1 comprises at least one upper bracket 2 anchored to a longitudinal member L of the frame T for fastening the head of the shock absorbing member D, possibly with a spring M, and at least one lower bracket 3 anchored to a respective supporting frame Ca, Cp of each mounting rack in a substantially centered position with respect to the upper bracket 2, for hinging the inner end of the wishbone B.

Each of the brackets 2, 3 has a connecting portion 4, 5 to the frame T that is suitably shaped for at least partially enclosing a respective longitudinal member L and a respective supporting frame Ca, Cp.

Due to such conformation, it will be possible to distribute the forces acting on the arm and on the shock absorbing member over a relatively wide contact surface and avoid localized stress concentrations.

Suitably, the upper bracket 2 comprises a main portion 6 defining a flange for fixing to the outer side face of the longitudinal member L and one plate 7 for anchoring the head of the shock absorbing member D, stiffened by a pair of side wings 8.

Advantageously, the connecting portion 4 is constituted by the lower part of the main portion 6 which is twice folded for matching the profile of the longitudinal member L, defining contact surfaces with the lower face and the inner side face of the longitudinal member itself.

Preferably, the fixing flange 6 is connected to the respective longitudinal member by means of screws V. The plate 7 is welded to the flange 6 so as to be substantially perpendicular to the axis of the shock absorbing member D. In particular, the plate 7 has a double tilt in order to follow the tilt of the shock absorbing member D with respect to the vertical.

Analogously, the lower bracket 3 comprises a substantially U-shaped main body 9 with a central core 10 substantially perpendicular to two opposite and substantially parallel wings 11.

The distance between the inner surfaces of the wings 11 1 is slightly greater than the outer dimension of the frame Ca, Cp.

The lower bracket 3 also comprises two pairs of shaped ears 12, 13 welded to the central core 10 in longitudinally offset positions.

The distance between the ears 12, 13 of each pair is sized so as to house fulcrum appendages of the wishbone B.

Screw connecting members G are also provided for, passing through the opposing wings 11 for removably fixing the lower bracket 3 to a corresponding supporting frame Ca, Cp.

Preferably, the lower bracket 3 comprises a longitudinal appendage 14 of the central core 10 intended to project beyond a corresponding rear frame Cp and having a hole 15 for anchoring an anti-rotation bar H of the axle of the wheel R borne by the respective suspension S.

The longitudinal appendage 14 is stiffened by a reinforcement square 16 fastened to the corresponding supporting frame Cp.

As an example, the brackets can be made of metal sheet with thickness comprised between 2mm and 5mm and preferably about 3mm. In such a manner, a considerable reduction will be obtained of the weight of the assembly which in turn will reduce that of the vehicle in its entirety.

The fastening assembly according to the invention is susceptible to numerous modifications and variations, all falling within the inventive concept expressed in the enclosed claims. All the details can be substituted by other technically equivalent elements, and the materials can be different according to needs, without departing from the scope of the invention.

Even if the assembly was described with particular reference to the enclosed figures, the reference numbers used in the description and in the claims are employed for improving the comprehension of the invention and do not constitute any limitation of the claimed protective scope.

## Claims

1. A fastening assembly (1) for a vehicle, wherein the assembly (1) comprises:
- a frame (T) having an upper portion (U) with at least one pair of longitudinal members (L) and a lower portion with at least one front mounting rack (A) and one rear mounting rack (P) with respective supporting frames (Ca, Cp) for axles (F) of wheels (R),
- one or more suspensions (S) each comprising at least one shock absorbing member (D) and at least one wishbone (B) with an inner end hinged to the frame (T) and an outer end fixed to a wheel pin (F),
- at least one upper bracket (2) anchored to a longitudinal member (L) of the frame (T) for fastening the head of a shock absorbing member (D);
- at least one lower bracket (3) anchored to a respective supporting frame (Ca, Cp) of each mounting rack (A, P) in a substantially centered position with respect to said upper bracket (2) for hinging the inner ends of a wishbone (B);
the assembly being **characterized in that** each of said brackets (2, 3) has a connecting portion (4, 5) to the frame (T) folded twice to at least partially enclose a respective longitudinal member (L) and a respective supporting frame (Ca, Cp), in such a manner to distribute the forces acting on the wishbone and on the shock absorbing member over a relatively wide contact surface and avoid localized stress concentrations.

2. Assembly as claimed in claim 1, **characterized in that** said upper bracket (2) comprises a main portion (6) defining a flange for fixing to the outer side face of a longitudinal member (L) and one plate (7) for anchoring the head of the shock absorbing member (D), stiffened by a pair of side wings (8).

3. Assembly as claimed in claim 1, **characterized in that** said connecting portion (4) is constituted by the lower part of said main portion (6) that is twice folded for matching the profile of the longitudinal member (L), defining contact surfaces with the lower face and the inner side face of the longitudinal member (L).

4. Assembly as claimed in claim 3, **characterized in that** said fixing flange (6) is connected to the respective longitudinal member (L) by means of screws (V) and said plate (7) is welded to said flange (6) so as to be substantially perpendicular to the axis of the shock absorbing member (D).

5. Assembly as claimed in claim 1, **characterized in that** said lower bracket (3) comprises a substantially U-shaped main body (9) with a central core (10) substantially perpendicular to two opposite and substantially parallel wings (11) with internal surfaces spaced by a distance slightly greater than the outer dimension of a respective supporting frame (Ca, Cp).

6. Assembly as claimed in claim 5, **characterized in that** said lower bracket (3) further comprises two pairs of shaped ears (12, 13) welded to said central core (10) in longitudinally offset positions, the distance between ears (12, 13) of each pair being sized so as to house fulcrum appendages of the wishbone (B).

7. Assembly as claimed in claim 5, **characterized in that** it provides for screw connecting members passing through said opposing wings for removably fixing said lower bracket (3) to a corresponding supporting frame (Ca, Cp).

8. Assembly as claimed in claim 5, **characterized in that** said lower bracket comprises a longitudinal appendage (14) of said central core (10) intended to project beyond a corresponding rear supporting frame (Cp) and having a hole (15) for anchoring an anti-rotation bar (H) of the axle of the wheel borne by the respective suspension (S).

9. Assembly as claimed in claim 8, **characterized in that** said longitudinal appendage (14) is stiffened by a reinforcement square (16) fastened to a corresponding supporting frame (Cp).

10. Assembly as claimed in claims 1, **characterized in that** said brackets (2, 3) are made of metal sheet with a thickness between 2mm and 5mm and preferably about 3mm.

## Patentansprüche

1. Befestigungsvorrichtung (1) für ein Fahrzeug, wobei die Vorrichtung (1) Folgendes einschließt:
- Einen Rahmen (T) mit einem oberen Teil (U), das mindestens ein Paar von Längselementen (L) enthält und einem unteren Teil mit mindestens einem vorderen Montagerahmen (A) und einem hinteren Montagerahmen (P), mit entsprechenden Stützrahmen (Ca, Cp) für die Achsen (F) von Rädern (R),
- eine oder mehrere Aufhängungen (S), die jede mindestens ein Stoßdämpfelement (D) enthält und mindestens einen Querlenker (B) mit einem Innenende, das am Rahmen (T) eingehängt ist, und einem Außenende, das am Radbolzen (F) befestigt ist,
- mindestens eine obere Halterung (2), die mit einem Längselement (L) des Rahmens (T) verankert ist zur Befestigung des Kopfes eines Stoßdämpfelements (D);
- mindestens eine untere Halterung (3), die mit einem entsprechenden Stützrahmen (Ca, Cp) jedes Montagerahmens (A, P) verankert ist, in einer im Wesentlichen mittigen Position in Bezug auf die obere Halterung (2) zum Einhängen der Innenenden eines Querlenkers (B);
die Vorrichtung ist **dadurch gekennzeichnet, dass** jede der Halterungen (2, 3) ein Verbindungsteil (4, 5) zum Rahmen (T) hat, das zweifach gefaltet ist, um mindestens zum Teil ein entsprechendes Längselement (L) und einen entsprechenden Stützrahmen (Ca, Cp) derart aufzunehmen, dass die auf den Querlenker und auf das Stoßdämpfelement über eine relativ umfangreiche Kontaktfläche wirkenden Kräfte verteilt und örtliche Belastungskonzentrationen vermieden werden.

2. Vorrichtung gemäß Anspruch 1, **dadurch gekennzeichnet, dass** die obere Halterung (2) ein Hauptteil (6) enthält, das eine Flansch darstellt für die Befestigung an die Außenseitenfläche eines Längselements (L) und eine Platte (7) zur Verankerung des Kopfes des Stoßdämpfelements (D), versteift durch ein Paar von Seitenflügeln (8).

3. Vorrichtung gemäß Anspruch 1, **dadurch gekennzeichnet, dass** das Verbindungsteil (4) aus einem unteren Teil des Hauptteils (6) besteht, das zweifach gefaltet ist zur Anpassung an das Profil des Längselements (L) zur Bildung von Kontaktflächen mit der unteren Fläche und der Innenseitenfläche des Längselements (L).

4. Vorrichtung gemäß Anspruch 3, **dadurch gekennzeichnet, dass** der Befestigungsflansch mit dem entsprechenden Längselement (L) über Schrauben (V) verbunden und die Platte (7) am Flansch (6) angeschweißt ist, so dass sie im Wesentlichen senkrecht zur Achse des Stoßdämpfelements (D) steht.

5. Vorrichtung gemäß Anspruch 1, **dadurch gekennzeichnet, dass** die untere Halterung (3) im Wesentlichen einen U-förmigen Hauptkörper (9) aufweist, mit einem zentralen Kern (10), im Wesentlichen senkrecht zu zwei gegenüberliegenden und im Wesentlichen parallelen Flügeln (11), mit Innenflächen, die durch einen Abstand voneinander getrennt sind, der etwas größer ist, als die Außenabmessungen eines entsprechenden Stützrahmens (Ca, Cp).

6. Vorrichtung gemäß Anspruch 5, **dadurch gekennzeichnet, dass** die untere Halterung (3) außerdem zwei Paare von geformten Laschen (12, 13) enthält, die in längsversetzten Positionen am zentralen Kern (10) angeschweißt sind; der Abstand zwischen den Laschen (12, 13) jedes Paars wurde so ausgelegt, dass es Drehpunktverlängerungen des Querlenkers (B) aufnehmen kann.

7. Vorrichtung gemäß Anspruch 5, **dadurch gekennzeichnet, dass** sie Schraubenverbindungselemente vorsieht, die durch die gegenüberliegenden Flügel gehen für eine abbaubare Befestigung der unteren Halterungen (3) an einem entsprechenden Stützrahmen (Ca, Cp).

8. Vorrichtung gemäß Anspruch 5, **dadurch gekennzeichnet, dass** die untere Halterung eine Längsverlängerung (14) des zentralen Kerns (10) enthält, die dafür vorgesehen ist, um über einen entsprechenden, hinteren Stützrahmen (Cp) hinauszuragen und eine Öffnung (15) hat für die Verankerung eines Drehsicherungsstabs (H) der Achse des Rads, die durch die entsprechende Aufhängung (S) abgefedert wird.

9. Vorrichtung gemäß Anspruch 8, **dadurch gekennzeichnet, dass** die Längsverlängerung (14) durch einen Verstärkungsvierkant (16) versteift wird, der an einem entsprechenden Stützrahmen (Cp) befestigt ist.

10. Vorrichtung gemäß Anspruch 1, **dadurch gekennzeichnet, dass** die Halterungen (2, 3) aus Blech bestehen, mit einer Stärke zwischen 2 mm und 5 mm und vorzugsweise von etwa 3 mm.

## Revendications

1. Dispositif de fixation (1) pour un véhicule, dans lequel le dispositif (1) comprend :
- un cadre (T) ayant une portion supérieure (U) avec au moins une paire d'organes (L) et une portion inférieure avec au moins un bâti monté à l'avant (A) et un bâti monté à l'arrière (P) avec des cadres respectifs de support (Ca, Cp) pour des essieux (F) de roues (R),
- une ou plusieurs suspensions (S) comprenant chacune au moins un organe absorbant les chocs (D) et au moins une fourchette (B) avec une extrémité interne montée pivotante sur le cadre (T) et une extrémité externe fixée à un axe de roue (F),
- au moins un étrier supérieur (2) ancré à un organe longitudinal (L) du cadre (T) pour la fixation de la tête d'un organe absorbant les chocs (D) ;
- au moins un étrier inférieur (3) ancré à un cadre de support respectif (Ca, Cp) de chaque bâti de montage (A, P) dans une position substantiellement centrée par rapport audit étrier supérieur (2) pour monter pivotantes les extrémités internes d'une fourchette (B) ;
le dispositif étant **caractérisé en ce que** chacun desdits étriers (2, 3) a une portion de raccordement (4, 5) au cadre (T) plié deux fois pour contenir au moins partiellement un organe longitudinal respectif (L) et un cadre de support respectif (Ca, Cp), de manière à distribuer les forces agissant sur la fourchette et sur l'organe absorbant les chocs au-dessus d'une surface de contact relativement large et éviter les concentrations localisées de contraintes.

2. Dispositif selon la revendication 1, **caractérisé en ce que** ledit étrier supérieur (2) comprend une portion principale (6) définissant une bride pour la fixation à la face latérale externe d'un organe longitudinal (L) et une plaque (7) pour l'ancrage de la tête de l'organe absorbant les chocs (D), raidi par une paire d'ailes latérales (8).

3. Dispositif selon la revendication 1, **caractérisé en ce que** ladite portion de raccordement (4) est constituée par la partie inférieure de ladite portion principale (6) qui est pliée deux fois pour correspondre au profil de l'organe longitudinal (L), définissant des surfaces de contact avec la face inférieure et la face latérale interne de l'organe longitudinal (L).

4. Dispositif selon la revendication 3, **caractérisé en ce que** ladite bride de fixation (6) est raccordée à l'organe longitudinal respectif (L) au moyen de vis (V) et ladite plaque (7) est soudée à ladite bride (6) de sorte à être substantiellement perpendiculaire à l'axe de l'organe absorbant les chocs (D).

5. Dispositif selon la revendication 1, **caractérisé en ce que** ledit étrier inférieur (3) comprend un corps principal substantiellement en forme de U (9) avec un noyau central (10) substantiellement perpendiculaire à deux ailettes opposées et substantiellement parallèles (11) avec des surfaces internes espacées d'une distance légèrement supérieure à la dimension externe d'un cadre de support respectif (Ca, Cp).

6. Dispositif selon la revendication 5, **caractérisé en ce que** ledit étrier inférieur (3) comprend également deux paires d'oreilles façonnées (12, 13) soudées audit noyau central (10) dans des positions longitudinalement décalées, la distance entre les oreilles (12, 13) de chaque paire étant dimensionnée de sorte à loger des appendices du point d'appui de la fourchette (B).

7. Dispositif selon la revendication 5, **caractérisé en ce qu'**il prévoit une vis raccordant des organes passant à travers lesdites ailettes s'opposant pour fixer de façon amovible ledit étrier inférieur (3) à un cadre de support correspondant (Ca, Cp).

8. Dispositif selon la revendication 5, **caractérisé en ce que** ledit étrier inférieur comprend un appendice longitudinal (14) dudit noyau central (10) prévu pour projeter au-delà d'un cadre de support arrière correspondant (Cp) et ayant un trou (15) pour ancrer une barre anti-rotation (H) de l'essieu de la roue supportée par la suspension respective (S).

9. Dispositif selon la revendication 8, **caractérisé en ce que** ledit appendice longitudinal (14) est raidi par un renfort carré (16) fixé à un cadre de support correspondant (Cp).

10. Dispositif selon la revendication 1, **caractérisé en ce que** lesdits étriers (2, 3) sont réalisés à partir d'une feuille de métal d'une épaisseur entre 2mm et 5mm et de préférence d'environ 3mm.
